# EUROPEAN PATENT SPECIFICATION

(11) **EP 2 308 630 B1**
(45) Date of publication and mention of the grant of the patent: **03.12.2014**
(21) Application number: 10187166.3
(22) Date of filing: 11.10.2010
(51) Int. Cl.: B23K 9/02, B23K 9/29, B23K 9/173

(54) **Narrow groove gas metal arc welding torch**
Gasmetallbogenschweißbrenner mit niedriger Nute
Chalumeau de soudage à l'arc de métal gazeux avec rainure étroite

(30) Priority: 12.10.2009 US 577507
(43) Date of publication of application: 13.04.2011
(73) Proprietor: J.Ray McDermott, S.A., Houston, Texas 77079 (US)
(72) Inventor: Doyle, Thomas Edward, Louisville, OH 44641-1505 (US); Breaux, Terry Louis, Houma, LA 70360 (US); Noel, Clyde David, Houma, LA 70364 (US); Berbakov, Paul, Coconut Creek, FL 33066 (US)
(74) Representative: Meldrum, David James

(56) References cited:
- CN-Y- 2 234 841
- JP-A- 5 220 574
- JP-A- 61 289 980
- US-A- 3 746 833
- US-A- 5 155 330

## Description

### Field and Background

The present invention is related to welding and more particularly but not exclusively to a narrow groove gas metal arc welding torch according to claim 1.

Commercial narrow groove thick section gas metal arc welding (GMAW) torches use an elongated contact tip with a cylindrical hole for delivery of the wire. There are many variations of contact tips for narrow groove GMAW but all use the same cylindrical hole design. In addition, the contact tip extends well beyond the gas cup in order to provide the proper contact tip to work distance required for welding. This torch configuration has a number of known issues.

One such issue is an inability to control the orientation of the wire cast plane to maintain accurate wire placement in the weld joint. Conventional welding torches use straight cylindrically drilled contact tips. Also, it is very difficult to completely or consistently straighten welding wire. Therefore, with conventional welding tips, the weld wire will exit the end of the contact tip with cast (bend in the wire). The orientation of the cast plane (the direction that the wire leaves the tip) can change given the straight cylindrical tip design. As a result, the location of the wire tip can vary while welding. This can be particularly noticeable when welding deep narrow weld grooves.

However, if using straightened wire, then inconsistent electrical contact between the contact tip and wire can result as the weld wire does require some cast in order to provide electrical contact with the copper tip. Because the wire cast and orientation of the cast plane can vary, the point of electric contact will also change. This condition can be further increased as the contact tip wears. The changing point of electrical contact causes changes in the characteristics of the welding arc. This behavior can be inappropriate for welding equipment.

Another potential issue is that of reduced wear properties, as a result of the cooling properties of the elongated contact tip configuration. Current welding torches that use an elongated cylindrical contact tip in order to weld deep narrow grooves have a very thin walled design at the exit of the tip. These welding tips may not do a satisfactory job of cooling the end of the weld tip due to poor thermal conductivity of the thin wall design. As a result, tips may get hotter than desired, thus reducing the wear properties. Poor wear is likely to require frequent changing of the contact tips.

Another potential issue is that of wasted shielding gas, due to proximity of the gas cup to the end of the contact tip. In current welding torches that use a cylindrical gas cup design the location of the gas cup is on the outside of the standard automated pipe weld grooves. As a result, a significant portion of the welding gas is lost to the sides of the pipe and thus does not provide shielding for welding. This results in the need to use higher gas flow rates in order to compensate for the partial gas delivery to the point of welding.

In normal weld grooves (non-narrow groove designs) wire placement accuracy may be of relatively low importance. However, with narrow groove weld joints the placement of the wire within the weld joint becomes much more relevant to the resultant weld quality.
CN 2234841 Y describes a narrow gap consumable-electrode argon arc welding gun. This document does not teach, at least, a narrow groove gas metal arc welding torch having a contact tip attached to a power block that receives and controls the curvature of a feed welding wire, the portion of the contact tip in contact with the welding feed wire having a radius of curvature smaller than the natural radius of the feed welding wire. This document also does not teach the use of a narrow groove gas metal arc welding torch having a secondary gas shield.
JP05220574 describes a gas shielded torch for multiple electrode arc welding.
US 5,155,330 describes a method and apparatus for GMAW welding.
DE 3220242 describes a narrow gap welding head.
US 6,172,333 describes an electronic welding apparatus and method.

### Summary

The torch according to the present invention is defined in claim 1. Particular aspects and embodiments are defined in the appended claims.

Viewed from a first aspect, there can be provided a narrow groove GMAW torch for thick section welding that includes a main body portion having a power block with electrical, welding wire, water cooling, and shielding gas connections and a contact tip. A dielectric is attached to the power block. A gas shield attached to the dielectric defines an annulus between them that functions as a secondary gas shield. A diffusing gas outlet in the dielectric delivers shielding gas to the annulus. The contact tip attached to the power block is designed to receive and control the curvature of the feed welding wire.

The various features of novelty provided by the invention are pointed out with particularity in the claims annexed to and forming a part of this disclosure. For a better understanding of the invention, its operating advantages and specific benefits attained by its uses, reference is made to the accompanying drawings and descriptive matter in which example embodiments are illustrated.

### Brief Description of the Drawings

In the accompanying drawings, forming a part of this specification, and in which reference numerals shown in the drawings designate like or corresponding parts throughout the same:
FIG. 1 is a perspective view of an apparatus.
FIG. 2 is an enlarged view of the apparatus.
FIG. 3 illustrates the apparatus in an operational position in a work piece.

While the invention is susceptible to various modifications and alternative forms, specific embodiments are shown by way of example in the drawings and are herein described in detail. It should be understood, however, that drawings and detailed description thereto are not intended to limit the invention to the particular form disclosed, but on the contrary, the invention is to cover all modifications, equivalents and alternatives falling within the scope of the present invention as defined by the appended claims.

### Detailed Description

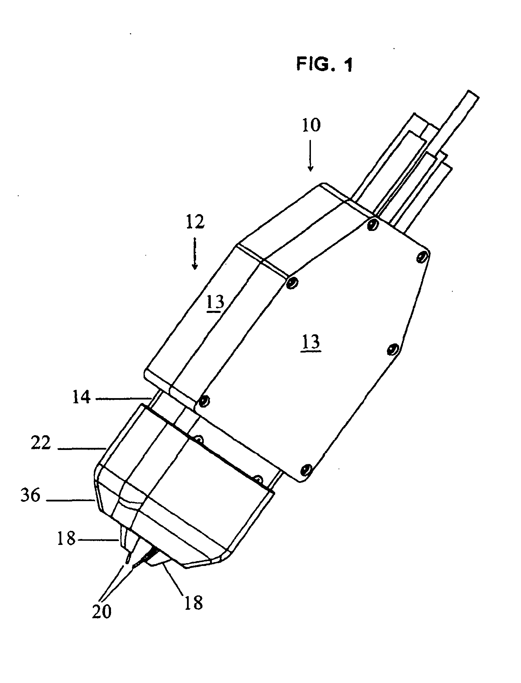

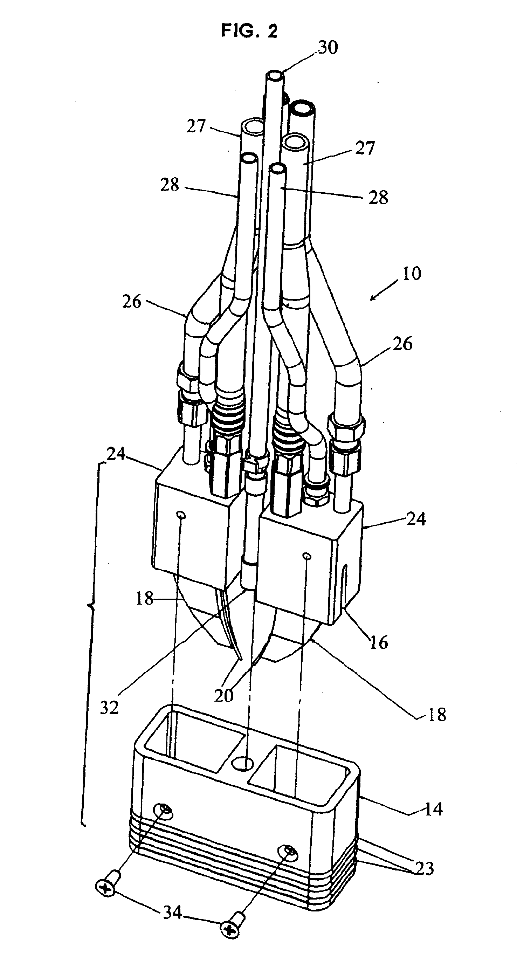

A narrow groove welding torch is generally indicated in FIG. 1 and 2 by numeral 10. The narrow groove welding torch 10 of the present examples is generally comprised of a torch main body 12, molded dielectric 14, primary gas shield 16, contact tips 18, feed welding wire 20, and secondary gas shield 22.

The torch main body 12 is enclosed within two base plates 13 that are fastened together around appropriate connections and structure that forms the main body. As seen in Fig. 2, two water cooled power blocks 24 are positioned adjacent each other. Each power block 24 includes a primary gas shield 16 (also referred to as the lateral gas shield cavity), contact tips 18, and the appropriate connections for power and shielding gas.

Each power block 24 includes a water cooled power cable 26, a feed wire and side shielding gas conduit 27, and return water hose 28. A central shielding gas conduit 30 is positioned between the power blocks 24. The welding torch main body 12 is sized and shaped in accordance with the work to be performed. Thus different sizes and shapes can be provided and can be interchanged for different work types and workpieces.

The molded dielectric 14 (an insulator cage) is provided with two rectangular passages therethrough to closely receive the power blocks 24 and a circular passage to receive the central shielding gas conduit 30. The dielectric 14 can be attached to the power blocks 24 by screws 34.

The secondary gas shield 22 fits closely over the dielectric 14 and is provided with a stepped down portion 36 having a smaller thickness than the main portion of the secondary gas shield 22. O-rings 23 on the dielectric 14 provide a seal between it and the secondary gas shield 22 to prevent the escape of shielding gas and hold the secondary gas shield 22 in place. Complementary grooves for receiving the O-rings 23 are provided on the dielectric 14 and secondary gas shield 22. The stepped down portion 36 is blade shaped and sized to fit in the gap between the work pieces being welded together. The annulus between the dielectric 14 and secondary gas shield 22 helps to retain the shielding gas during welding operations.

One contact tip 18 is mounted on each power block 24 such that they are separated from but face each other. The contact tips 18 are connected to the electrical wire that is fed through power cables 26 to create the welding arc during operations. The opposing inner edges of the contact tips 18 are sized to receive and hold the feed wire 20 and curved to force the feed wire 20 to be in consistent contact with the contact tips 18. In order to maintain the consistent contact of the feed wire 20 with the contact tips 18 it may be appropriate that the radius of the curvature on the contact tips 18 be smaller than the natural radius of the feed wire 20. While the drawings illustrate the presence of two contact tips and feed wires it should be understood that this is for illustration purposes and that an arrangement with one contact tip and feed wire may be used for appropriate welding situations. Similarly, an increased number of tips and feed wires may be used for appropriate circumstances.

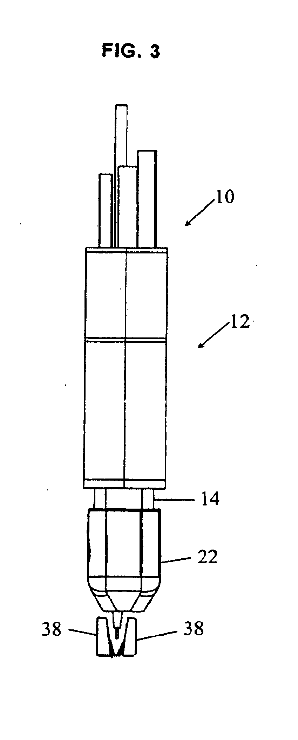

In operation, as seen in Fig. 3, the contact tips 18 are inserted between the work pieces 38 to be welded together and the welding operation is started. The dispensing of shielding gas through the primary gas shield 16 and shielding gas diffuser 32 in the annulus between the secondary gas shield 22 and dielectric 14, the addition of feed wire 20, electrical control of the welding arc, and movement of the welding torch 10 are accomplished in the normal manner to achieve the desired weld joint between the work pieces 38. Two different shielding gases may be used if desired.

Arrangements according to the present disclosure can provide for improved accuracy of wire position control while welding and/or for improved consistency of electrical contact between the wire and the contact tip and/or for improved wear life of the contact tip.

The size and shape of the contact tips 18 of the present examples allows the use of an increased amount of copper in the contact tips. The increased volume of copper promotes heat conduction, which results in keeping the contact tips cooler and correspondingly improved wear characteristics.

Arrangements according to the present disclosure can provide for improved gas shielding at the weld pool.

One property provided by a secondary gas shield is that it allows the use of two different shielding gases. Consistent, high quality welds are achieved by use of shielding gases, and such gases can be expensive. The design of the present teachings allows the use of a higher performing, expensive, shielding gas through a primary gas shield and the use of a second, less expensive, gas to be directed into the annulus between the dielectric and the secondary gas shield.

While specific embodiments and/or details of the present teachings have been shown and described above to illustrate the application of the principles of the invention, it is understood that this invention may be embodied as more fully described in the claims, or as otherwise known by those skilled in the art (including any and all equivalents), without departing from such principles.

## Claims

1. A narrow groove gas metal arc welding torch (10), comprising:
a power block (24) having electrical, feed welding wire, water cooling, and shielding gas connections (26, 27, 28, 30);
a dielectric (14) attached to the power block;
a gas shield (22) attached to the dielectric that defines an annulus between the shield and dielectric;
a contact tip (18) attached to the power block that receives and controls the curvature of a feed welding wire (20), the portion of the contact tip in contact with the welding feed wire having a radius of curvature smaller than the natural radius of the feed welding wire; and
a shielding gas diffuser (32) provided on the dielectric.

2. The narrow groove gas metal arc welding torch of claim 1, further comprising a shielding gas outlet port provided in the dielectric such that shielding gas is delivered in the annulus defined between the molded dielectric and the gas shield.

3. The narrow groove gas metal arc welding torch of claim 1 or 2, wherein the contact tip is formed of copper.

4. The narrow groove gas metal arc welding torch of any preceding claim, comprising:
a main body portion comprising the power block and contact tip.

## Patentansprüche

1. Metallschutzgasschweißbrenner (10) mit schmaler Nut, der Folgendes umfasst:
einen Leistungsblock (24) mit elektrischer, Zufuhrschweißdraht-, Wasserkühl- und Schutzgasanschlüssen (26, 27, 28, 30);
ein Dielektrikum (14), das an dem Leistungsblock angebracht ist;
einen Gasschutz (22), der an dem Dielektrikum angebracht ist, der einen Ring zwischen dem Schutz und dem Dielektrikum definiert;
eine Kontaktspitze (18), die an den Leistungsblock angebracht ist, die einen Zufuhrschweißdraht (20) aufnimmt und seine Krümmung steuert, wobei Abschnitt der Kontaktspitze mit dem Schweißzufuhrdraht mit einem Krümmungsradius in Kontakt steht, der kleiner ist als der natürliche Radius des Zufuhrschweißdrahts; und
einen Schutzgasdiffusor (32), der an dem Dielektrikum vorgesehen ist.

2. Metallschutzgasschweißbrenner mit schmaler Nut nach Anspruch 1, weiterhin umfassend einen Schutzgasauslassport, der im Dielektrikum vorgesehen ist, so dass Schutzgas in dem zwischen dem geformten Dielektrikum und dem Gasschutz definierten Ring zugeführt wird.

3. Metallschutzgasschweißbrenner mit schmaler Nut nach Anspruch 1 oder 2, wobei die Kontaktspitze aus Kupfer ausgebildet ist.

4. Metallschutzgasschweißbrenner mit schmaler Nut nach einem vorhergehenden Anspruch, umfassend:
einen Hauptkörperabschnitt, der den Leistungsblock und die Kontaktspitze umfasst.

## Revendications

1. Chalumeau de soudage à l'arc de métal gazeux avec rainure étroite (10), comprenant :
un bloc de puissance (24) ayant des connexions électriques, pour fil de soudure d'apport, de refroidissement à eau, et de gaz protecteur (26, 27, 28, 30) ;
un diélectrique (14) attaché au bloc de puissance ;
un protecteur à gaz (22) attaché au diélectrique,
qui définit un anneau entre le protecteur et le diélectrique ;
une pointe de contact (18) attachée au bloc de puissance, qui reçoit et commande la courbure d'un fil de soudure d'apport (20), la portion de la pointe de contact en contact avec le fil de soudure d'apport ayant un rayon de courbure inférieur au rayon naturel du fil de soudure d'apport ; et
un diffuseur de gaz protecteur (32) prévu sur le diélectrique.

2. Chalumeau de soudage à l'arc de métal gazeux avec rainure étroite selon la revendication 1, comprenant en outre un orifice de sortie de gaz protecteur prévu dans le diélectrique de telle sorte que le gaz protecteur soit fourni dans l'anneau défini entre le diélectrique moulé et le protecteur à gaz.

3. Chalumeau de soudage à l'arc de métal gazeux avec rainure étroite selon la revendication 1 ou 2, dans lequel la pointe de contact est formée de cuivre.

4. Chalumeau de soudage à l'arc de métal gazeux avec rainure étroite selon l'une quelconque des revendications précédentes, comprenant :
une portion de corps principale comprenant le bloc de puissance et la pointe de contact.
